Europäisches Patentamt

European Patent Office

Office européen des brevets

(11) Veröffentlichungsnummer : **0 126 384**
**B1**

(12) # EUROPÄISCHE PATENTSCHRIFT

(45) Veröffentlichungstag der Patentschrift :
19.10.88

(51) Int. Cl.⁴ : **H 04 L 25/49, H 04 L 7/02**

(21) Anmeldenummer : 84105259.0

(22) Anmeldetag : 09.05.84

(54) Verfahren und Anordnung zur Decodierung eines n.B/(n+1)B-codierten Datenstroms.

(30) Priorität : 13.05.83 DE 3317466

(43) Veröffentlichungstag der Anmeldung :
28.11.84 Patentblatt 84/48

(45) Bekanntmachung des Hinweises auf die Patenterteilung : 19.10.88 Patentblatt 88/42

(84) Benannte Vertragsstaaten :
AT BE CH DE FR GB IT LI NL SE

(56) Entgegenhaltungen :
US-A- 3 185 963
US-A- 3 241 067
CONFERENCE RECORD OF THE IEEE INTERNATIONAL CONFERENCE ON COMMUNICATIONS (ICC83), Band 2 vom 3, 19.-22. Juni 1983, Seiten 690-694, Boston, Massachusetts; IEEE New York, US; G. HANKE: "Fast 7B/8B coder and decoder for an optical transmission system"

(73) Patentinhaber : Siemens Aktiengesellschaft Berlin und München
Wittelsbacherplatz 2
D-8000 München 2 (DE)

(72) Erfinder : Hanke, Gerhard, Dipl. Ing.
Im Geisner 3
D-6101 Gross-Bieberau (DE)

EP 0 126 384 B1

Jouve, 18, rue St-Denis, 75001 Paris, France

## Beschreibung

Die Erfindung betrifft ein Verfahren und eine zugehörige Anordnung zur Decodierung eines nB/(n+1)B-codierten Datenstroms, der aus Wörtern oder Bitgruppen mit jeweils n Signalbits und einem eingefügten Codierbit besteht.

Diese beispielsweise in dem Aufsatz von R. O. Carter, « Low-Disparity Binary Coding System » in Electronics Letters, May 1965, Vol. 1, No. 3, Seiten 67 u. 68 beschriebene nB/(n + 1)B-Codierung wird bekanntlich in der Nachrichtentechnik häufig dazu verwendet, um aus einem einfachen Binärcode einen Leitungscode zu erzeugen, dessen Frequenzspektrum keinen Gleichstromanteil und möglichst geringe Anteile bei tiefen Frequenzen hat, aber einen möglichst hohen Anteil bei der halben Bitfolgefrequenz hat, der möglichst noch unabhängig vom jeweiligen Informationsinhalt ist. Dabei folgt nach n nicht invertierten oder nach n invertierten Signalbits des ursprünglichen Binärcodes ein weiteres — (n + 1) tes — Bit als Codierbit, das z. B. mit dem logischen Wert 1 bzw. 0 anzeigt, daß eine bzw. keine Invertierung der ursprünglichen n Signalbits sendeseitig oder auf der Übertragungsstrecke vorgenommen wurde, um in dem so gebildeten Datenstrom im zeitlichen Mittel eine möglichst gleiche Zahl von 0- und 1-Bits zu erreichen.

Die Decodierung des nB(n + 1)B-Codes auf der Empfangsseite erfolgt in bekannter Weise so, daß in dem ursprünglichen Code ein Rahmenaufbau vorausgesetzt wird, der in einer Synchronisierschaltung des Empfängers erkennbar ist und mit dessen Hilfe dann die exakte zeitliche Lager der n Signalbits und des Codierbits mittels einer Logik festgestellt wird. Je nach logischem Wert des Codierbits gibt dann die Logik die n zugehörigen Signalbits entweder invertiert oder aber unbeeinflußt als Ausgangssignal aus.

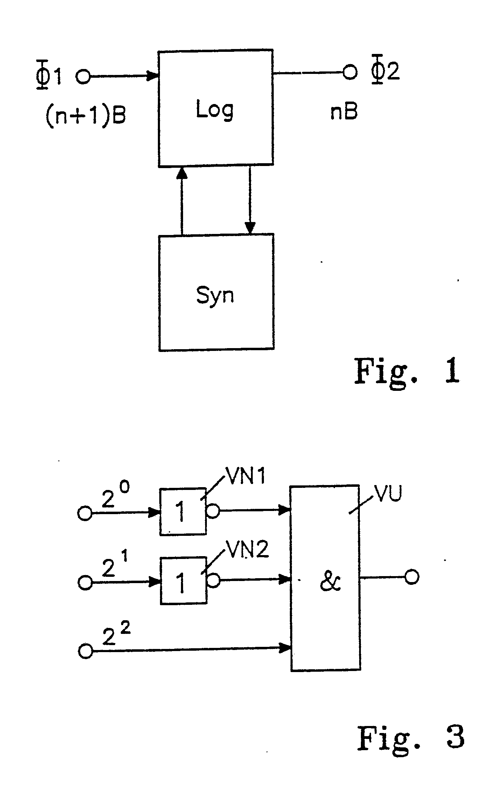

Fig. 1 zeigt dieses bekannte Prinzip einer üblichen Decodier-Schaltung. Ein empfangener nB/(n + 1) B-codierter Datenstrom Ø 1, — der aus einer fortlaufenden Aneinanderreihung von jeweils n Signalbits, einem Codierbit und weiteren Bits besteht, die den Rahmenaufbau kennzeichnen, — wird in einen Empfänger eingelesen, mit Hilfe der den Rahmenaufbau kennzeichnenden Bits in einer Synchronisierschaltung Syn synchronisiert und in einer Logikschaltung Log decodiert. Am Ausgang des Empfängers steht dann ein Datenstrom Ø 2 zur Verfügung, der aus einer fortlaufenden Aneinanderreihung von jeweils n Signalbits und den den Rahmenaufbau kennzeichnenden Bits besteht.

Dieses herkömmliche Verfahren der Decodierung hat den Nachteil, daß durch den Rahmenaufbau des ursprünglichen Codes die Anwendungsmöglichkeiten eingeschränkt sind und sich je nach Rahmenaufbau bzw. Rahmenlänge u.U. sehr lange Synchronisierzeiten ergeben können.

Nachteilig ist weiterhin, daß durch die Einfügung der den Rahmenaufbau kennzeichnenden Bits die Übertragungsgeschwindigkeit der Nutzinformation sich verringert bzw. die Übertragungsgeschwindigkeit des Datenstroms Ø 1 über die Übertragungsstrecke entsprechend erhöht werden muß. Dieser Nachteil tritt auch dann ein, wenn erst nach der Umcodierung des ursprünglichen Codes in den nB/(n + 1)B-Code die Kennzeichnung des Rahmenaufbaues vorgenommen wird.

Der Erfindung liegt somit die Aufgabe zugrunde, ein Verfahren anzugeben, das einen nB(n + 1) B-Code auch bei Fehlen von den Rahmenaufbau kennzeichnenden Bits decodieren kann und weiterhin eine vergleichsweise sehr kurze Synchronisierzeit hat.

Diese Aufgabe wird durch die kennzeichnenden Merkmale des Anspruchs 1 gelöst.

Eine zugehörige Anordnung und vorteilhafte Weiterbildungen der Erfindung sind in den Unteransprüchen gekennzeichnet.

Die mit der Erfindung erzielten Vorteile bestehen insbesondere darin, daß trotz Fehlens von den Rahmenaufbau kennzeichnenden Bits eine sehr kurze Synchronisierzeit benötigt wird. Durch eine bevorzugte Weiterbildung mit paralleler Verarbeitung der Bits innerhalb des Empfängers können darüberhinaus sehr hohe Bitraten verarbeitet werden.

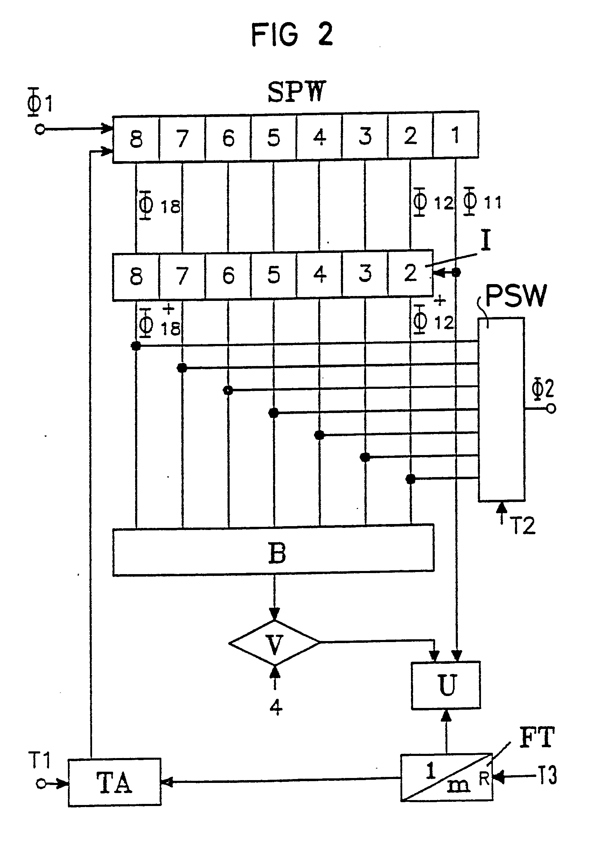

Die Erfindung wird anhand eines in Fig. 2 und 3 dargestellten Ausführungsbeispiels im folgenden näher erläutert. Es zeigen

Fig. 2 eine Schaltungsanordnung nach der Erfindung und

Fig. 3 eine abgewandelte Ausführungsform eines Vergleichers der Schaltungsanordnung nach Fig. 2.

Dem in Fig. 2 dargestellten Ausführungsbeispiel ist als nB/(n + 1)B-Code ein 7B/8B-Code zugrundegelegt. In diesem Code gehört zu jeweils 7 Bits des ursprünglichen Binärcodes ein Codierbit, so daß jeweils 8 Bits eine Bitgruppe bilden.

Das Bildungsgesetz dieses 7B/8B-Code besteht bekanntlich darin, daß die n = 7 Signalbits einer Bitgruppe dann und nur dann invertiert werden, wenn von den 7 Signalbits mehr als 4 Bits [(n + 1)/2] den logischen Wert 1 haben und gleichzeitig bei allen bereits übertragenen Bits (einschließlich der Codierbits) die Anzahl der Bits mit dem logischen Wert 1 größer als die Anzahl der Bits mit dem logischen Wert 0 ist, oder wenn von den 7 Signalbits mehr als 4 Bits den logischen Wert 0 haben und gleichzeitig bei allen bereits übertragenen Bits die Anzahl der Bits mit dem logischen Wert 0 größer als die Anzahl der Bits mit dem logischen Wert 1 ist.

Aus diesem Bildungsgesetzt ergibt sich, daß bei fehlerfreiem Betrieb bei genau 4 Signalbits mit dem logischen Wert 1 innerhalb der 7 Signalbits das in der Bitgruppe als Codierbit stehende Bit niemals eine Invertierung der Signalbits anzeigen darf. Wenn trotzdem das Bit, das an der für das Codierbit festgelegten Stelle innerhalb der Bitgruppe steht, einen eine Invertierung der zugehörigen n = 7 Signalsbits anzeigenden Wert hat (der im Ausführungsbeispiel der logische Wert 1 ist), so kann diese somit unzulässige Bitgruppe entweder durch einen Bitfehler verursacht worden sein oder es herrscht auf der Empfangsseite Asynchronität; hierbei tritt die unzulässige Bitgruppe mit sehr hoher Wahrscheinlichkeit auf.

Fig. 2 zeigt ein bevorzugtes Ausführungsbeispiel einer Anordnung nach der Erfindung zur Decodierung eines 7B/8B-codierten seriellen Datenstromes Ø1, der aus 8 Bit langen Bitgruppen besteht und keine den Rahmenaufbau kennzeichnenden Bits aufweist. Der Datenstrom Ø 1 wird in einen Serien/Parallel-Wandler SPW mit einem Einlesetakt T 1 eingelesen und als eine Folge von 8-Bit-Parallelbitgruppen Ø 11 bis Ø 18 parallel mit einer Taktgeschwindigkeit von 1/8 T 1 ausgegeben, wobei jeweils das erste Bit dieser Parallelbitgruppen Ø 11 bis Ø 18 das Codierbit Ø11 ist und die restlichen Bits eine Parallelsignalbitgruppe Ø 12 bis Ø 18 bilden.

Gemäß der Codiervorschrift des nB/(n + 1)B-Codes werden die Parallelsignalbitgruppen Ø 12 bis Ø 18 in einem Inverter I bei einem zugehörigen den logischen Wert 1 führenden Codierbit Ø 11 invertiert bzw. bei einem logischen Wert 0 nicht invertiert.

Die den Inverter I verlassenden Parallelsignalbitgruppen Ø12$^+$ bis Ø18$^+$ gelangen zu einem Parallel/Serien-Wandler PSW und werden dort als Ausgangsbitstrom Ø2 mit einem Takt T2 [= n/(n + 1) · T$_1$ = (7/8)T$_1$] ausgegeben. Er wird vorzugsweise mittels einer phasengeregelten Oszillatorschaltung aus dem Einlesetakt T1 gewonnen.

Gleichzeitig gelangen die Parallelsignalbitgruppen Ø 12$^+$ bis Ø 18$^+$ zu einem Bewerter B, der die Anzahl der Bits mit dem logischen Wert 1 innerhalb jeder Parallelsignal-Bitgruppe ermittelt und diesen Wert als Binärzahl an den ersten Eingang eines Vergleichers V weitergibt.

An dessen zweiten Eingang ist die fest vorgegebene Zahl 4 = (n + 1)/2 als Binärzahl aufgeschaltet.

Bei Übereinstimmung der Informationen an beiden Eingängen des Vergleichers V wird ein nachfolgendes UND-Glied U aktiviert, so daß ein gleichzeitig am UND-Glied U anstehendes eine Invertierung anzeigendes Codierbit Ø 11 mit dem logischen Wert 1 durchgeschaltet werden kann und als Fehlerimpuls an den Eingang eines Frequenzteilers FT mit dem Teilverhältnis m : 1 gelangt.

Dieser Fall tritt nur jedesmal dann ein, wenn wie vorstehend erläutert eine unzulässige Bitgruppe vorliegt, und zwar durch Bitfehler sehr selten, durch Asynchronität aber sehr dicht gehäuft.

Nach m solcher unzulässigen Bitgruppen gibt der Frequenzteiler FT einen Impuls zu einer Taktausblendschaltung TA ab, welche einen Taktimpuls aus dem Eingangstakt T 1 des Serien/Parallel-Wandlers SPW ausblendet. Durch diese Ausblendung werden die in dem Datenstrom Ø 1 enthaltenen 8-Bit-Gruppen um jeweils ein Bit innerhalb des Serien/Parallel-Wandlers SPW verschoben. Bei Asynchronität ist in diesem nämlich die Reihenfolge der Signalbits und des Codierbits lediglich zyklisch vertauscht, so daß eines der Signalbits den Inverter steuert.

Treten unzulässige Bitgruppen durch Asynchronität auf, so ist spätestens nach n Taktimpulsausblendungen die Synchronität hergestellt, was einer Anzahl von maximal n × m unzulässiger Bitgruppen entspricht.

Um unnötige bzw. störende Auslösung von Synchronisierschritten bei lediglich durch Bitfehler mit normaler Fehlerrate verursachten unzulässigen Bitgruppen zu unterbinden, wird der Frequenzteiler FT mittels eines Löschtaktes T3, der am Rücksetzeingang R anliegt, in bestimmten Zeitabständen auf Null gesetzt. Die Taktfrequenz dieses — vorzugsweise aus einem freilaufenden Oszillators kommenden — Löschtaktes T3 muß größer sein als das Produkt aus dem Einlesetakt T1 mal der Fehlerwahrscheinlichkeit dividiert durch den Teilungsfaktor m des Frequenzteilers FT.

Fig. 3 zeigt eine weitere Ausführungsform des Vergleichers V in Fig. 2. Anders als beim Vergleicher V in Fig. 2 wird hier keine Vergleichszahl eingegeben und in einem integrierten Baustein mit verhältnismäßig hoher Signalverzögerung mit dem Ausgangssignal des Bewerters B verglichen. Vielmehr nimmt hier durch eine feste Verschaltung von zwei Negier-Gliedern VN1 und VN2 mit einem UND-Glied VU dessen Ausgang nur dann den logischen Wert 1 an, wenn am Eingang vom Bewerter her die Zahl 4 = (n + 1)/2 in digitaler Codierung (100) anliegt.

Ein Chip-carrier-Bauweise praktisch ausgeführter Aufbau der Decodierschaltung nach Fig. 2 in ECL-Technik wurde für Bitraten bis 560 Mbit/s erfolgreich erprobt.

## Patentansprüche

1. Verfahren zur Decodierung eines nB/(n + 1)B-codierten seriellen Datenstroms (Ø1), der aus Bitgruppen mit jeweils n Signalbits und einem Codierbit besteht, dadurch gekennzeichnet, daß der Datenstrom (Ø 1), der keinen Rahmenaufbau bzw keine diesen kennzeichnende Bits aufweisen muß, daraufhin überwacht wird, ob und wie häufig unzulässige Bitgruppen auftreten, bei denen (n + 1)/2 Signalbits den logischen Wert 1 haben und zugleich das Bit, das an der für das Codierbit (Ø11) festgelegten Stelle steht, den eine Invertierung der n Signalbits (Ø 12 bis Ø 18) anzeigenden logischen Wert hat und daß ein über der Fehlerwahrscheinlichkeit liegendes Auftreten dieser unzulässigen Bitgruppen als Asynchronität des Decoders bewertet wird und einen Synchronisierschritt auslöst.

2. Anordnung zur Ausübung des Verfahrens nach Anspruch 1, dadurch gekennzeichnet,

— daß ein Serien/Parallel-Wandler (SPW) vorgesehen ist, der die seriell empfangenen Bitgruppen des Datenstroms (Ø 1) mit dem Einlesetakt (T1) einliest und als Parallelbitgruppen (Ø 11 bis Ø 18) mit dem Paralleltakt [T1/(h + 1)] ausgibt,

— daß ein Inverter (I) dem Serien/Parallel-Wandler (SPW) nachgeordnet ist, der in Abhängigkeit vom Wert des Codierbits (Ø 11) die parallelen Signalbits (Ø 12 bis Ø 18) jeweils einer Parallelbitgruppe invertiert bzw nicht invertiert,

— daß ein dem Inverter (I) nachgeschalteter Parallel/Seriell-Wandler (PSW) die vom Inverter ausgegebenen Parallelsignalbitgruppen (Ø 12⁺ bis Ø 18⁺) als Ausgangsbitstrom (Ø 2) mit dem Ausgangstakt [T2 = n · T1/(n + 1)] seriell ausgibt,

— daß ein parallel zum Parallel/Serien-Wandler geschalteter Bewerter (B) die Anzahl der Signalbits mit dem logischen Wert 1 innerhalb einer Parallelsignalbitgruppe (Ø 12⁺ bis Ø 18⁺) ermittelt,

— daß ein Vergleicher (V) vorgesehen ist, der diese ermittelte Anzahl mit dem festen Wert (n + 1)/2 vergleicht und

— daß bei Übereinstimmung und gleichzeitigem Auftreten eines eine Invertierung anzeigenden Bits und der Stelle des Codierbits (Ø 11) ein UND-Glied U einen Fehlerimpuls für eine in die Taktzuführung des Einlesetaktes (T1) geschaltete Taktausblendschaltung (TA) abgibt, die einen Taktimpuls dieses Einlesetakts unterdrückt.

3. Anordnung nach Anspruch 2, dadurch gekennzeichnet, daß ein Frequenzteiler (FT) mit dem Teilungsverhältnis m : 1 der Taktausblendschaltung (TA) vorgeschaltet ist, der erst nach m Fehlerimpulsen — also nach einer Häufung von m unzulässigen Bitgruppen — eine Unterdrückung eines Taktimpulses des Einlesetakts (T1) auslöst.

4. Anordnung nach Anspruch 3, dadurch gekennzeichnet, daß auf den Rücksetzeingang des Frequenzteilers (FT) ein Löschtakt (T3) geschaltet ist, der diesen Frequenzteiler auf « Null » setzt, wobei die Frequenz dieses Löschtaktes größer ist, als das Produkt aus der Fehlerwahrscheinlichkeit des Datenstroms (Ø 1) und der Frequenz des Einlesetakts (T1), dividiert durch den Teilungsfaktor m des Frequenzteilers.

**Claims**

1. A method of decoding an nB/(n + 1)B-coded serial data flow (Ø1) which comprises bit groups each comprising n signal bits and one coding bit, characterised in that the data flow (Ø1), which need not possess any frame structure or bits characterising the frame structure, is then monitored to determine whether and how frequently impermissible bit groups occur in which (n + 1)/2 signal bits have the logic value 1 and simultaneously the bit which occurs at the location specified for the coding bit (Ø11) has the logic value which indicates an inversion of the n signal bits (Ø12 to Ø18), and that an occurrence of these impermissible bit groups which exceeds the fault probability is evaluated as asynchronism of the decoder and initiates the synchronising step.

2. An arrangement for the execution of the method claimed in claim 1, characterised in that
— a series/parallel converter (SPW) is provided by which the bit groups of the data flow (Ø1), which are received in serial form, are input with the input clock signal (T1) and are output as parallel bit groups (Ø11 to Ø18) by the parallel clock signal [T1/(n + 1)],

— the series/parallel converter (SPW) is connected at its output to an inverter (I) which, in dependence upon the value of the coding bit (Ø11), inverts or does not invert the parallel signal bits (Ø12 to Ø18) of a respective parallel bit group,

— a parallel/series converter (PSW) which is connected to the output end of the inverter (I) outputs in serial form the parallel signal bit groups (Ø12⁺ to Ø18⁺), output by the inverter, as output bit flow (Ø2) with the output clock signal [T2 = n · T1/(n + 1)],

— an evaluator (B) which is connected in parallel to the parallel/series converter determines the number of signal bits having the logic value 1 within a parallel signal bit group (Ø12⁺ to Ø18⁺),

— a comparator (V) is provided which compares this determined number with the fixed value (n + 1)/2 and

— in the event that this comparison indicates identity and in the event of the simultaneous occurrence of a bit indicating inversion at the location of the coding bit (Ø11), an AND-gate U emits an error pulse for a clock gating-out circuit (TA) which is connected into the clock supply of the input clock signal (T1) and which suppresses one clock pulse of this input clock signal.

3. An arrangement as claimed in claim 2, characterised in that the clock gating-out circuit (TA) is preceded by a frequency divider (FT) which has the division ration m : 1 and which only after m error pulses — thus after an accumulation of m impermissible bit groups — initiates the suppression of one clock pulse of the input clock signal (T1).

4. An arrangement as claimed in claim 3, characterised in that the resetting input of the frequency divider (FT) is supplied with an erasing clock signal (T3) which sets this frequency divider at « zero », where the frequency of this erasing clock signal is greater than the product of the error probability of the data flow (Ø1) and the frequency of the input clock signal (T1), divided by the division factor m of the frequency divider.

**Revendications**

1. Procédé pour le décodage d'un flux sériel de données (Ø 1) codé nB/(n + 1)B, qui est constitué de groupes de bits comprenant chacun n bits de signal et un bit de code, caractérisé en ce que le flux de données (Ø 1), qui ne présente pas nécessairement une structure de trame ou des bits caractérisant une telle structure, est contrôlé sur l'apparition et la fréquence d'apparition de groupes de bits inadmissibles, dans lesquels (n + 1)/2 bits de signal ont la valeur logique 1 et le bit occupant la position fixée pour le bit de code (Ø 11) possède en même temps la valeur logique indiquant l'inversion des n bits de signal (Ø 12) à

(∅ 18), et que l'apparition au-delà de la probabilité d'erreur de ces groupes de bits inadmissibles est évaluée comme un asynchronisme du décodeur et déclenche une opération de synchronisation.

2. Dispositif pour la mise en œuvre du procédé selon la revendication 1, caractérisé en ce que
— un convertisseur série/parallèle (SPW) est prévu pour l'entrée des groupes de bits, reçus en série, du flux de données (∅ 1) avec le rythme d'entrée (T1) et pour leur délivrance comme groupes de bits parallèles (∅ 11) à (∅ 18) avec le rythme parallèle [T1/(n + 1)],
— le convertisseur série/parallèle (SPW) est suivi par un inverseur (I) qui, suivant la valeur du bit de code (∅ 11), inverse ou n'inverse pas les bits de signal parallèles (∅ 12 à ∅ 18) de chaque groupe de bits parallèles,
— l'inverseur (I) est suivi d'un convertisseur parallèle/série (PSW) qui reçoit les groupes de bits de signal parallèles (∅ 12$^+$ à ∅ 18$^+$) fournis par l'inverseur et qui les délivre en série comme un flux de bits sortant (∅ 2) avec le rythme de sortie [T2 = n · T1/(n + 1)],
— un pondérateur (B), monté en parallèle avec le convertisseur parallèle/série, détermine le nombre des bits de signal ayant la valeur logique 1 à l'intérieur d'un groupe de bits de signal parallèles (∅ 12$^+$ à ∅ 18$^+$),

— un comparateur (V) est prévu pour comparer le nombre ainsi déterminé avec la valeur fixe (n + 1)/2 et
— en cas de concordance et apparition simultanée d'un bit indiquant une inversion à la position du bit de code (∅ 11), un élément ET (U) fournit une impulsion d'erreur pour un circuit de suppression de rythme (TA) interposé dans le dispositif d'amenée du rythme d'entrée (T1), circuit qui supprime une impulsion de ce rythme d'entrée.

3. Dispositif selon la revendication 2, caractérisé en ce que le circuit de suppression de rythme (TA) est précédé d'un diviseur de fréquence (FT), présentant le rapport de division m : 1, qui déclenche seulement la suppression d'une impulsion du rythme d'entrée (T1) à la suite de m impulsions d'erreur, c'est-à-dire après l'accumulation de m groupes de bits inadmissibles.

4. Dispositif selon la revendication 3, caractérisé par l'application à l'entrée de remise à l'état initial du diviseur de fréquence (FT) d'un rythme d'effacement (T3) qui remet ce diviseur à « zéro » et dont la fréquence est plus grande que le produit de la probabilité d'erreur du flux de données (∅ 1) et de la fréquence du rythme d'entrée (T1), divisé par le facteur de division m du diviseur de fréquence.

Φ1 ○──→ Log ○ Φ2

(n+1)B        nB

Syn

## Fig. 1

$2^0$ ○──→ 1 ○──→ VN1

$2^1$ ○──→ 1 ○──→ VN2

& ──→ VU ○

$2^2$ ○──────→

## Fig. 3

1

# FIG 2